# FASCICULE DE BREVET EUROPEEN

(11) **EP 3 738 180 B1**
(45) Date de publication et mention de la délivrance du brevet: **29.12.2021**
(21) Numéro de dépôt: 19703399.6
(22) Date de dépôt: 10.01.2019
(51) Int. Cl.: H01S 3/00, H01S 3/23

(54) **SYSTEME LASER ET PROCEDE DE GENERATION D'IMPULSIONS LASER DE TRES HAUTE CADENCE**
LASERSYSTEM UND VERFAHREN ZUR ERZEUGUNG VON LASERPULSEN MIT SEHR HOHER WIEDERHOLUNGSRATE
LASER SYSTEM AND METHOD FOR GENERATING LASER PULSES WITH VERY HIGH REPETITION RATE

(30) Priorité: 12.01.2018 FR 1850249
(43) Date de publication de la demande: 18.11.2020
(73) Titulaire: Amplitude Systemes, 33600 Pessac (FR)
(72) Inventeur: HONNINGER, Clemens, 33610 CESTAS (FR); AUDOUARD, Eric, 43130 Solignac-Sous-Roche (FR)
(74) Mandataire: Jacobacci Coralis Harle
(86) Numéro de dépôt international: PCT/FR2019/050051
(87) Numéro de publication internationale: WO 2019/138192

(56) Documents cités:
- US-A1- 2014 050 235
- J. MAGNE ET AL: "Generation of a 4 /spl times/ 100 GHz pulse-train from a single-wavelength 10-GHz mode-locked laser using superimposed fiber Bragg gratings and nonlinear conversion", JOURNAL OF LIGHTWAVE TECHNOLOGY., vol. 24, no. 5, 1 mai 2006 (2006-05-01), pages 2091-2099, XP055433129, US ISSN: 0733-8724, DOI: 10.1109/JLT.2006.872682
- ELSMERE S P ET AL: "High-Repetition-Rate Subpicosecond Source of Fiber-Amplified Vertical-External-Cavity Surface-Emitting Semiconductor Laser Pulses", IEEE PHOTONICS TECHNOLOGY LETTERS, IEEE SERVICE CENTER, PISCATAWAY, NJ, US, vol. 20, no. 8, 15 avril 2008 (2008-04-15) , pages 623-625, XP011206289, ISSN: 1041-1135
- MICHELLE Y SANDER ET AL: "10GHz waveguide interleaved femtosecond pulse train", LASERS AND ELECTRO-OPTICS (CLEO), LASER SCIENCE TO PHOTONIC APPLICATIONS)-CLEO: 2011 - LASER SCIENCE TO PHOTONIC APPLICATIONS- 1-6 MAY 2011, BALTIMORE, MD, USA, IEEE, US, 1 mai 2011 (2011-05-01), pages 1-2, XP031891757, ISBN: 978-1-4577-1223-4
- AKCAALAN ONDER ET AL: "Compact 1.5-GHz intra-burst repetition rate Yb-doped all-PM-fiber laser system for ablation-cooled material removal", 2017 CONFERENCE ON LASERS AND ELECTRO-OPTICS EUROPE & EUROPEAN QUANTUM ELECTRONICS CONFERENCE (CLEO/EUROPE-EQEC), IEEE, 25 juin 2017 (2017-06-25), page 1, XP033239660, DOI: 10.1109/CLEOE-EQEC.2017.8086685

## Description

### DOMAINE TECHNIQUE AUQUEL SE RAPPORTE L'INVENTION

La présente invention concerne de manière générale le domaine des lasers à impulsions.

Elle concerne plus particulièrement un système laser à impulsions ultra-brèves et de forte puissance.

Elle concerne en particulier un système et un procédé de génération d'impulsions laser ultra-brèves, de haute puissance et ayant une fréquence de répétition modulable.

### ARRIERE-PLAN TECHNOLOGIQUE

La cadence ou fréquence de répétition des impulsions émises par un laser impulsionnel est souvent déterminée en fonction de l'architecture utilisée et des spécifications souhaitées pour le faisceau laser.

Une architecture de type oscillateur maître-amplificateur de puissance (ou MOPA pour Master Oscillator Power Amplifier) est communément utilisée pour réaliser des sources lasers de forte puissance. Dans ce cas, une source appelée oscillateur maître génère un signal source constitué d'impulsions source. Ce signal source est amplifié dans un système amplificateur optique comportant un ou plusieurs étages d'amplification en série. Il existe différents types de sources. La source peut être impulsionnelle, en particulier une source basée sur un laser à blocage de modes, dont la longueur de la cavité oscillateur définit une fréquence de répétition. Une source impulsionnelle peut aussi être basée sur un oscillateur déclenché (Q-switched).

Dans certaines applications, l'utilisateur peut avoir besoin d'augmenter la puissance du faisceau laser incident tout en maintenant la durée ultra-brève et l'énergie des impulsions laser.

Une augmentation de la fréquence de répétition des impulsions peut permettre d'augmenter la puissance du faisceau laser mais au détriment de l'énergie par impulsion (voir la publication Can Kerse et al., « 3.5 GHz intra-burst repetition rate ultrafast Yb-doped fiber laser », Optics Communication 366, 2016, 404-409).

La publication J. Magne et al. « Generation of a 4 × 100 GHz pulse-train 2 from a single-wavelength 10-GHz mode-locked laser using superimposed fiber Bragg gratings an nonlinear conversion », Journal of Lightwave Technology, vol. 24, no. 5, 2006, décrit un multiplicateur de fréquence de répétition à base de réseaux de Bragg sur fibre optique (FBG) superposés.

La publication Elsmere S.P. et al. « High-repetition-rate subpicosecond source of fiber-amplified Vertical-External-Cavity Surface-Emitting Semiconductor Laser pulses », IEEE Photonics Technology Letters, vol. 20, no. 8, 2008, décrit un laser à semiconducteur, de type VECSEL, combiné à une cavité à absorbant saturable (SESAM) à blocage de mode, qui émet directement des impulsions à une fréquence de répétition de plusieurs gigahertz.

La publication Michelle Y Sander et al. « 10 GHz waveguide interleaved femtosecond pulse train », 2011, Conference on Lasers and Electro-Optics (CLEO) 2011, décrit une source laser comprenant un oscillateur femtoseconde (fs) couplé à un dispositif à guides d'onde intégré sur un circuit planaire comprenant des interféromètres de Mach-Zehnder ajustables thermiquement pour générer un train d'impulsions fs au double ou quadruple de la fréquence de l'oscillateur.

La publication Akçaalan Onder et al. « Compact 1.5 GHz intra-burst repetition rate Yb-doped all-PM-fiber laser system for ablation-cooled material removal », CLEO 2017, IEEE, 25 juin 2017, page 1, décrit un système laser de type CPA entièrement fibré comprenant un oscillateur émettant des impulsions source à une fréquence de répétition de 385 MHz couplé à un modulateur acousto-optique, un amplificateur à fibre optique et un compresseur.

Il est souhaitable de développer un système laser apte à générer des impulsions laser de forte puissance à très haute énergie et/ou très haute cadence pour des applications industrielles.

De manière générale, il est souhaitable d'augmenter la puissance crête disponible dans une source laser impulsionnelle tout en limitant le nombre d'amplificateurs optiques.

En particulier, il est souhaitable de développer un système laser générant des impulsions laser de forte puissance et de forte énergie, de la centaine de nJ à quelques dizaines de µJ, à une fréquence de répétition modulable, pouvant aller d'une impulsion à la demande à un train d'impulsions de très haute cadence, ou encore une ou plusieurs rafales d'impulsions avec une durée modulable pour chaque rafale et/ou entre rafales successives.

### OBJET DE L'INVENTION

Afin de remédier aux inconvénients précités de l'état de la technique, la présente invention propose un système laser très haute cadence.

Plus particulièrement, on propose selon l'invention un système laser très haute cadence comportant un oscillateur à blocage de mode apte à générer un faisceau laser source comprenant une série d'impulsions source de durée femtoseconde ou picoseconde à une première fréquence de répétition F1 supérieure ou égale à 800 mégahertz, et un système amplificateur optique adapté pour recevoir et amplifier la série d'impulsions source à une deuxième fréquence de répétition multiple de la première fréquence de répétition F1, le multiple étant un nombre entier naturel supérieur ou égal à deux, de manière à générer une série d'impulsions laser de très haute fréquence de répétition.

Selon l'invention, le système laser comporte en outre un dispositif multiplicateur de fréquence de répétition disposé entre l'oscillateur et le système amplificateur optique, le dispositif multiplicateur de fréquence de répétition comprenant un premier coupleur-séparateur optique, une première ligne à retard optique et un deuxième coupleur-séparateur optique ayant une première sortie, le premier coupleur-séparateur optique étant adapté pour séparer spatialement le faisceau laser source en un premier faisceau d'impulsions à la première fréquence de répétition et un second faisceau d'impulsions à la première fréquence de répétition, la première ligne à retard optique étant disposée entre le premier coupleur-séparateur optique et deuxième coupleur-séparateur optique sur un trajet du second faisceau d'impulsions à la première fréquence de répétition, la première ligne à retard optique étant adaptée pour induire un retard optique égal à une demi-période de la première fréquence de répétition sur le second faisceau d'impulsions et générer un second faisceau d'impulsions retardé d'une demi-période, et le deuxième coupleur-séparateur optique étant adapté pour recombiner le premier faisceau et le second faisceau retardé d'une demi-période et former sur la première sortie un premier faisceau recombiné dans lequel les impulsions sont cadencées à la deuxième fréquence de répétition égale au double de la première fréquence de répétition.

De façon avantageuse, le deuxième coupleur-séparateur optique comporte une deuxième sortie, le deuxième coupleur-séparateur optique étant adapté pour former sur la deuxième sortie un second faisceau recombiné comprenant des impulsions à la deuxième fréquence de répétition égale au double de la première fréquence de répétition, le premier faisceau recombiné et le second faisceau recombiné étant synchronisés entre eux en sortie du deuxième coupleur-séparateur optique.

Selon une variante de ce mode de réalisation, le dispositif multiplicateur de fréquence de répétition comprend une deuxième ligne à retard optique et un combineur optique ayant une première sortie, la deuxième ligne à retard optique étant disposée entre le deuxième coupleur-séparateur optique et le combineur optique sur un trajet du second faisceau recombiné, la deuxième ligne à retard optique étant adaptée pour induire un retard optique égal à un quart de période de la première fréquence de répétition sur le second faisceau recombiné et générer un second faisceau d'impulsions retardé d'un quart de période, et le combineur optique étant adapté pour recombiner le premier faisceau recombiné et le second faisceau d'impulsions retardé d'un quart de période et former sur sa première sortie un premier faisceau quadruplé en fréquence de répétition comprenant des impulsions à une troisième fréquence de répétition égale au quadruple de la première fréquence de répétition.

De façon avantageuse, le combineur optique comporte une deuxième sortie, le combineur optique étant adapté pour former sur sa deuxième sortie un second faisceau quadruplé en fréquence de répétition comprenant des impulsions à la troisième fréquence de répétition égale au quadruple de la première fréquence de répétition, le premier faisceau quadruplé en fréquence de répétition et le second faisceau quadruplé en fréquence de répétition étant synchronisés entre eux en sortie du combineur optique.

Selon un aspect particulier et avantageux, le premier coupleur-séparateur optique, le deuxième coupleur-séparateur optique et, respectivement, le combineur optique sont des coupleurs polarisants ou à maintien de polarisation, et comportant en outre un dispositif polariseur adapté pour combiner le premier faisceau recombiné et le second faisceau recombiné ou, respectivement, le premier faisceau quadruplé en fréquence de répétition et le second faisceau quadruplé en fréquence de répétition.

Selon un autre aspect particulier et avantageux, le système laser comporte en outre un compresseur d'impulsions disposé sur la première sortie du deuxième coupleur-séparateur optique et/ou un autre compresseur d'impulsions disposé sur la deuxième sortie du deuxième coupleur-séparateur optique.

Selon encore un autre aspect particulier et avantageux, le système laser comporte en outre un compresseur d'impulsions disposé sur la première sortie du combineur optique et/ou un autre compresseur d'impulsions disposé sur la deuxième sortie du combineur optique.

D'autres caractéristiques non limitatives et avantageuses du système laser conforme à l'invention, prises individuellement ou selon toutes les combinaisons techniquement possibles, sont les suivantes :
- l'oscillateur à blocage de mode est choisi parmi : un oscillateur semiconducteur ou un oscillateur à état solide, par exemple opérant en régime soliton, un oscillateur à fibre fortement dopée et de longueur comprise entre 7 cm et 10 cm, ou un oscillateur hybride fibre/état solide avec une très courte fibre fortement dopée, de longueur inférieure ou égale à environ 15 cm, comprise par exemple entre 7 cm et 10 cm comme milieu actif à fibre ;
- le système amplificateur optique comporte un amplificateur optique ou une pluralité d'amplificateurs optiques choisis parmi les types d'amplificateurs optiques suivants : amplificateur à fibre optique active et/ou amplificateur à cristal;
- l'amplificateur à cristal est de type à barreau, à plaque (slab) ou à disque mince (thin disk) ;
- le système amplificateur optique comporte une pluralité d'amplificateurs optiques disposés en cascade, la pluralité d'amplificateurs optiques comportant un amplificateur optique de puissance ;
- le système laser comporte en outre un système optique non-linéaire doubleur de fréquence optique ou tripleur de fréquence optique ;
- le système laser comporte en outre un sélecteur d'impulsions disposé en aval de l'oscillateur et en amont du système amplificateur optique ou, respectivement, de l'amplificateur optique de puissance, le sélecteur d'impulsions étant adapté pour sélectionner et/ou moduler en amplitude une rafale d'impulsions et injecter la rafale d'impulsions dans le système amplificateur optique ou, respectivement, dans l'amplificateur optique de puissance ;
- le système laser comporte en outre en option une autre source adaptée pour générer un faisceau d'impulsions complémentaires de la rafale d'impulsions et un autre coupleur disposé de manière à recevoir et combiner le faisceau secondaire et la rafale d'impulsions source en un faisceau d'impulsions composite ayant une fréquence de répétition égale à la fréquence de répétition intra-rafale de la rafale d'impulsions, l'autre coupleur étant adapté pour injecter le faisceau d'impulsions composite dans le système amplificateur optique ou dans l'amplificateur optique de puissance ;
- le système laser comporte en outre un modulateur optique disposé en aval du système amplificateur optique, le modulateur optique étant adapté pour sélectionner une rafale ou une pluralité de rafales d'impulsions amplifiées et/ou pour moduler en amplitude la rafale ou la pluralité de rafales d'impulsions amplifiées.

L'invention propose également un procédé de génération d'impulsions laser de très haute cadence comme défini dans la revendication 15.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente schématiquement un système laser selon l'invention basé sur un oscillateur à très haute cadence ;
- la figure 2 illustre schématiquement un exemple de réalisation d'un oscillateur laser femtoseconde opérant à très haute cadence ;
- la figure 3 illustre schématiquement un autre exemple de réalisation d'un oscillateur laser femtoseconde opérant à très haute cadence ;
- la figure 4 représente schématiquement un système laser selon un premier mode de réalisation de l'invention basé sur un oscillateur à très haute cadence ;
- la figure 5 représente schématiquement un système laser selon un deuxième mode de réalisation comprenant en outre un sélecteur d'impulsion ;
- la figure 6 représente schématiquement un système laser selon un troisième mode de réalisation comprenant un dispositif de stabilisation d'inversion du système amplificateur optique de puissance ;
- la figure 7 représente schématiquement la structure d'un doubleur de fréquence de répétition destiné à être utilisé en combinaison avec l'un des modes de réalisation ;
- la figure 8 représente schématiquement la structure d'un multiplicateur de fréquence de répétition par un facteur 4 destiné à être utilisé en combinaison avec l'un des modes de réalisation de l'invention ;
- la figure 9 illustre un exemple d'impulsions source issues d'un oscillateur à très haute cadence ;
- les figures 10-11 illustrent un exemple de génération de rafales d'impulsions laser de forte énergie à très haute cadence.

### Dispositif et Procédé

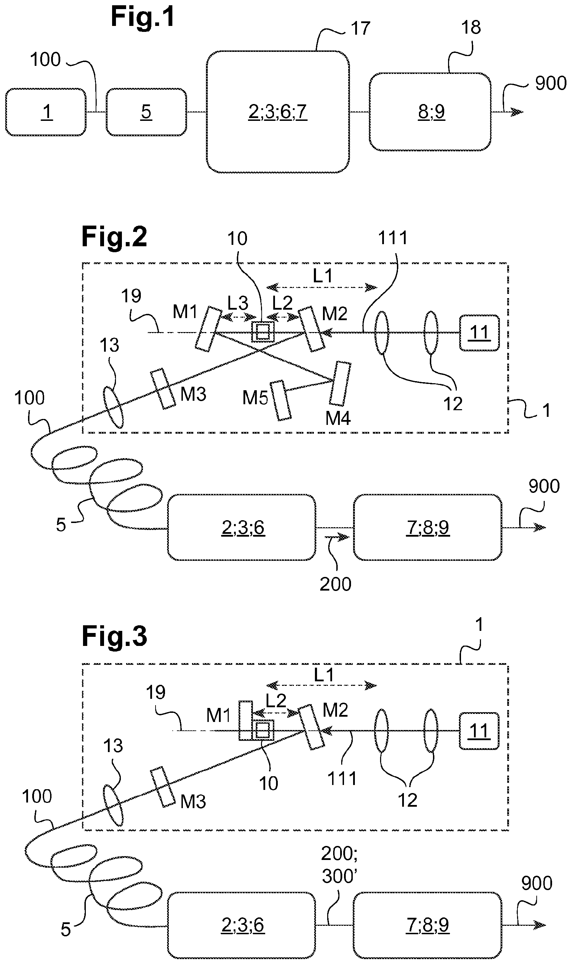

Sur la figure 1, on a représenté sous forme de schéma-bloc les principaux composants d'un système laser basé sur un oscillateur 1 à modes bloqués opérant à haute cadence proche du GHz, une fibre optique passive 5, un premier sous-système monolithique 17 à fibre optique active et un autre sous-système optique 18 fonctionnant en espace libre.

Dans le présent document, on entend par fibre optique active une fibre optique dopée utilisée comme milieu amplificateur optique, par exemple une fibre optique dopée terre rare. On entend par fibre optique passive une fibre optique généralement non dopée qui n'est pas utilisée comme milieu amplificateur optique et ayant principalement une fonction de transmission.

Dans un système laser à impulsions conventionnel, on utilise en général un oscillateur à base de fibre optique active qui fonctionne à une fréquence de répétition de l'ordre de 100 MHz et en tous cas inférieure à 500 MHz. Un oscillateur à fibre dans cette gamme de fréquence correspond à une cavité ayant une longueur d'au moins 20 cm pour intégrer toutes les fonctions nécessaires au fonctionnement de l'oscillateur.

L'oscillateur 1 est ici un oscillateur femtoseconde (ou picoseconde) qui génère des impulsions source 100 ultrabrèves à une première fréquence de répétition, notée F1. On choisit un oscillateur fonctionnant à une première fréquence de répétition, F1, qui est supérieure ou égale à 800 MHz ou même supérieure ou égale à 1 GHz.

L'oscillateur 1 est un oscillateur à blocage de mode. Dans un exemple, l'oscillateur 1 est un oscillateur à base de semiconducteur (de type VCSEL) ou encore un oscillateur à état solide opérant en régime soliton. Dans une autre variante, l'oscillateur 1 est un oscillateur hybride comprenant des éléments en espace libre et une fibre optique de quelques cm de long fortement dopée.

L'oscillateur 1 génère des impulsions source 100 ultrabrèves qui sont de faible énergie, de l'ordre de 1 à 100 pJ par impulsion. Ce niveau d'énergie par impulsion est très inférieur aux énergies nécessaires pour atteindre le seuil d'ablation pour des matériaux solides tels que verre, semiconducteur ou métal, qui se situe au-delà de la centaine de mJ/cm².

Un oscillateur à base de composés semiconducteurs binaires ou ternaires, par exemple InGaAs, InP ou InGaP, de type VCSEL permet d'accorder aisément la longueur d'onde des impulsions source sur une large bande spectrale compatible avec un amplificateur à fibre optique active dopée ytterbium fonctionnant à une longueur d'onde de -1030 nm et/ou avec un amplificateur à fibre optique active dopée erbium fonctionnant à une longueur d'onde de -1500 nm, ou encore un amplificateur à fibre optique active dopée thulium ou holmium fonctionnant à une longueur d'onde de -2000 nm. De plus, un oscillateur de type VCSEL est adapté pour fonctionner dans une gamme de fréquence de répétition allant jusque 10 GHz ou 20 GHz.

Le premier sous-système 17 monolithique à fibre optique active comporte par exemple un système amplificateur 2 à fibre optique active, comprenant par exemple un préamplificateur à fibre optique active et éventuellement un ou plusieurs amplificateurs à fibre optique active de puissance. De façon avantageuse, le premier sous-système 17 comporte en outre un sélecteur 3 d'impulsions et/ou un étireur d'impulsions 6 et/ou un isolateur optique 7, disposé(s) entre le préamplificateur à fibre optique active et le ou les amplificateurs à fibre optique active de puissance. L'étireur d'impulsions 6, est constitué de préférence d'une fibre optique passive de longueur adaptée ou de: réseaux de Bragg chirpés ou encore de fibre optique à dispersion spécifique (bandgap fiber).

L'autre sous-système optique 18 comporte par exemple un isolateur optique, éventuellement un amplificateur optique de puissance, un compresseur d'impulsions 8 et/ou un modulateur optique 9. De manière connue, le compresseur d'impulsions 8 permet de recomprimer les impulsions étirées dans l'étireur 6 du premier sous-système 17 en amont de l'amplification optique de puissance. Le modulateur optique 9 a une fonction de porte optique, il permet de sélectionner un ou plusieurs trains d'impulsions en sortie.

Le système laser de la figure 1 permet de générer un train d'impulsions laser femtosecondes 900 à une fréquence de répétition supérieure ou égale au gigahertz (GHz) ou un train de rafales d'impulsions laser femtosecondes à une fréquence de répétition intra-rafale supérieure ou égale au gigahertz (GHz) et à une fréquence de répétition inter-rafale par exemple de 100 Hz, ou de 100 kHz, ou encore de l'ordre du MHz ou plus.

La figure 2 représente un exemple détaillé de configuration d'oscillateur à mode bloqué et à haute cadence de répétition. L'oscillateur à mode bloqué 1 comporte une pompe 11, un système optique d'entrée 12, une cavité optique résonante comprenant des miroirs M1, M2, M3, M4 et M5, un milieu actif laser 10 disposé dans la cavité optique résonante et un système optique de sortie 13. De manière préférée, le milieu actif laser 10 est constitué d'un cristal laser ayant une épaisseur égale par exemple à 10 mm. Le milieu actif laser 10 est par exemple constitué d'une matrice solide passive (verre, YAG, KGW, fibre...) et d'un dopant actif à base d'ions terre rare, le plus souvent de l'ytterbium ou de l'erbium, du thulium ou de l'holmium. La longueur optique d'un aller-retour dans la cavité résonante est de l'ordre de 15 cm. Un cristal ou une fibre active très fortement dopée et très courte d'environ 7 cm à 10 cm de longueur maximum, permet de réduire considérablement la longueur optique de la cavité résonante, définie par la longueur réelle divisée par l'indice optique du cristal ou, respectivement, de la fibre active, par comparaison avec un milieu actif à base de fibre optique active relativement moins dopée, et ainsi de fabriquer un oscillateur laser ayant par construction une première fréquence de répétition F1 très élevée. On entend ici par cristal ou fibre optique très fortement dopée, un cristal ou une fibre optique dopé(e) par des ions actifs de telle manière que la longueur d'absorption à la longueur d'onde de pompe soit nettement inférieure à la longueur du cristal ou de la fibre optique (d'un facteur 1 ou 2). En pratique, dans ce cas, la longueur d'absorption est inférieure à quelques cm.

Dans un exemple de réalisation, le milieu actif laser 10 est disposé dans l'air. Selon une variante, le milieu actif laser 10 est un cristal qui est fixé par deux blocs de verre ou de cristal non-dopé aux deux miroirs d'extrémité de la cavité résonante pour former une structure monolithique sans air.

La diode de pompe 11 génère un rayonnement de pompe 111 continu ou quasi continu. Le système optique d'entrée 12 injecte le rayonnement de pompe 111 dans la cavité optique résonante suivant l'axe optique longitudinal 19 de la cavité à travers le miroir M2. Le miroir M2 est transparent au rayonnement de pompe 111. Le système optique d'entrée 12 est par exemple un système optique à lentilles. Le système optique d'entrée 12 focalise le rayonnement de pompe 111 dans un milieu laser actif 10. Le milieu laser actif 10 émet un faisceau laser source. Les miroirs M1, M2, M4 et M5 sont réfléchissants pour le faisceau laser source. Le miroir M5 comporte un absorbant saturable à semiconducteur permettant d'initier et de maintenir l'effet de blocage de mode. Le miroir M3 est partiellement réfléchissant et partiellement transparent pour le faisceau laser source.

Dans un exemple de réalisation, la distance L1 entre le système optique d'entrée 12 et le milieu laser actif 10 est d'environ 60 mm, la distance L2 entre le centre du miroir concave M2 et une face du cristal formant le milieu laser actif 10 est d'environ 15 mm, la distance L3 entre le centre du miroir concave M1 et l'autre face du cristal laser actif 10 est d'environ 15 mm, la distance entre le miroir concave M1 et le miroir M4 est d'environ 66 mm, la distance entre le miroir M4 et le miroir M5 est d'environ 15 mm et la distance entre le miroir concave M2 et le miroir M3 est d'environ 60 mm. La longueur physique de la cavité est d'environ 170 mm. La fréquence de répétition F1 est alors de 880 MHz, la période de répétition de 1,1 ns environ.

De manière connue, la cavité optique résonante est configurée pour fonctionner en mode bloqué de manière à générer en sortie de la cavité optique résonante un faisceau laser source comprenant un train d'impulsions source 100 de durée femtoseconde à une première fréquence de répétition (F1) supérieure ou égale à 800 mégahertz (MHz). Le système optique de sortie 13 injecte le faisceau laser source impulsionnel dans la fibre optique passive 5.

La fibre optique passive 5 injecte le faisceau laser source impulsionnel dans le premier sous-système monolithique 17. Le système amplificateur optique 2 amplifie les impulsions source 100 et forme des impulsions laser à la première fréquence de répétition (F1). De façon avantageuse, le sélecteur d'impulsion 3 sélectionne plusieurs impulsions formant une rafale d'impulsions ayant une fréquence de répétition intra-rafale égale à la première fréquence de répétition (F1). De façon alternative, le sélecteur d'impulsion 3 sélectionne plusieurs rafales d'impulsions. Dans un mode de réalisation particulier, le sélecteur d'impulsion 3 sélectionne un nombre déterminé d'impulsions pour créer une ou plusieurs rafales d'impulsions.

La figure 3 représente un autre exemple détaillé de configuration d'oscillateur à mode bloqué et à haute cadence de répétition. Les mêmes signes de référence désignent les mêmes éléments que sur les figures 1-2. Dans la configuration de la figure 3, la cavité optique résonante comporte uniquement le milieu actif laser 10, un miroir M1, un miroir M2 et un miroir M3. La longueur de la cavité illustrée en figure 3 est plus petite que celle illustrée en figure 2. La configuration de la figure 3 permet ainsi d'obtenir une première fréquence de répétition F1 plus élevée, par exemple supérieure à 1 GHz.

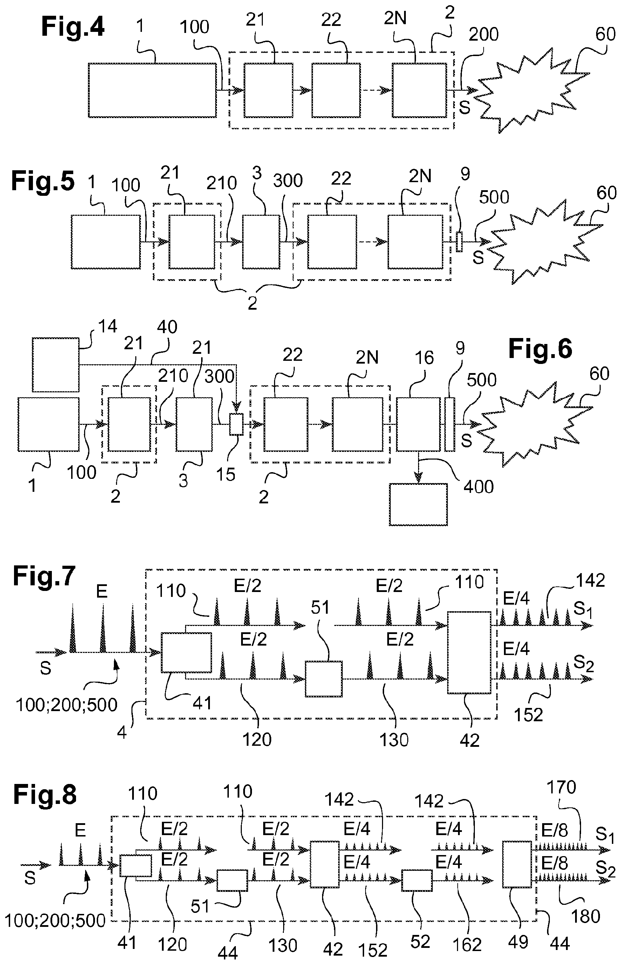

Sur la figure 4, on a représenté un système laser comportant un oscillateur 1 et un système amplificateur optique 2.

Le système amplificateur optique 2 comporte un amplificateur optique ou plusieurs amplificateurs optiques disposés en cascade. Le système amplificateur optique 2 est constitué d'un ou plusieurs amplificateur(s) à fibre optique active et/ou amplificateur(s) à cristal et/ou d'un système amplificateur hybride. Dans le présent document, on entend par système amplificateur hybride un système comprenant une combinaison d'au moins un amplificateur à fibre et d'au moins un amplificateur à cristal. Par exemple, le système amplificateur optique 2 comporte un premier amplificateur optique 21 ou préamplificateur, un deuxième amplificateur optique 22 et un Nième amplificateur optique 2N. Les amplificateurs optiques 22,..., 2N sont par exemple des amplificateurs optiques de puissance.

Dans le premier mode de réalisation illustré sur la figure 4, l'oscillateur 1 génère un faisceau laser source comprenant une série d'impulsions source 100 à la première fréquence de répétition F1. Le système amplificateur optique 2 reçoit la série d'impulsions source 100 et les amplifie pour former une série d'impulsions laser 200 à la première fréquence de répétition F1. Ce premier mode de réalisation permet de générer des impulsions laser 200 à une première fréquence de répétition F1 très élevée. Toutefois, la puissance moyenne étant limitée par le système amplificateur optique 2, l'énergie de chaque impulsion laser 200 est alors limitée par la très haute fréquence de répétition F1. Dans un exemple de réalisation, on considère un oscillateur 1 générant des impulsions source de durée -250 fs à une première fréquence de répétition F1 de 880 MHz combiné avec un système amplificateur optique 2 comprenant un étireur à fibre passive, un préamplificateur à fibre monomode et un amplificateur à fibre monomode à large cœur. La puissance moyenne en sortie du système amplificateur optique 2 est de l'ordre de 20 W. Dans ce cas, les impulsions laser 200 sont séparées temporellement de 1.1 ns et l'énergie E est limitée à environ quelques dizaines de nanojoules par impulsion laser 200 sur la sortie S, pouvant atteindre le microjoule pour des puissances moyennes de l'ordre du kW. Ce niveau d'énergie par impulsion est bien supérieur à celui en sortie de l'oscillateur 1. Toutefois, ce niveau d'énergie est en général insuffisant pour dépasser le seuil d'ablation d'un matériau solide 8 tel que du verre, un semiconducteur ou un métal, mais peut convenir à un matériau à faible seuil d'ablation tel qu'un polymère.

Néanmoins, il semble que l'efficacité d'ablation ne dépende pas seulement de l'énergie par impulsion laser. Ainsi, l'application d'impulsions laser ultrabrèves d'énergie relativement limitée et à très haute fréquence de répétition F1 peut permettre d'obtenir un effet dit d'ablation refroidie (ablation-cooled material removal) et d'augmenter de manière significative l'efficacité d'ablation du matériau.

Sur les figures 5 à 8, les mêmes signes de référence désignent des éléments identiques ou analogues à ceux des figures 1-4.

Dans le deuxième mode de réalisation, illustré sur la figure 5, un sélecteur d'impulsion 3 (ou pulse picker en terminologie anglaise) est disposé entre le préamplificateur 21 et les amplificateurs de puissance 22, ..., 2N. Dans le cas où l'oscillateur 1 délivre une puissance suffisante (par exemple supérieure à 50 mW), le sélecteur d'impulsion 3 peut aussi être placé entre l'oscillateur 1 et le préamplificateur 21.

Le préamplificateur 21 reçoit les impulsions source 100 à la première fréquence de répétition F1 et les amplifie pour former des impulsions préamplifiées 210 à la première fréquence de répétition F1.

Le sélecteur d'impulsion 3 comporte un modulateur optique de type électro-optique ou acousto-optique. Le sélecteur d'impulsion 3 reçoit les impulsions préamplifiées 210. Le sélecteur d'impulsion 3 sélectionne une rafale de M impulsions 300, où M est un nombre entier naturel compris généralement entre 1 et 1000, ou entre 50 et 500 impulsions et de préférence entre 50 et 200 impulsions. Le sélecteur d'impulsion 3 peut fonctionner en mode impulsion à la demande, en mode rafale d'impulsion à la demande ou en mode rafales périodiques à une troisième fréquence de répétition, notée F3, comprise entre 100 Hz et 10 MHz, pouvant aller jusqu'à 100 MHz. L'intervalle temporel entre deux rafales peut varier selon l'application. Cette variation de fréquence de répétition peut modifier la dynamique de gain dans les amplificateurs et conduire à une variation de l'énergie par impulsion. Dans un exemple, le sélecteur d'impulsion 3 fonctionne avec un rapport cyclique réduit, inférieur à 50%, et de préférence inférieur à 30 % ou même inférieur à 20 %. Dans un exemple de réalisation particulier, le sélecteur d'impulsion 3 fonctionne en sélectionnant périodiquement des rafales de M≈ 80 impulsions, à une troisième fréquence de répétition F3 égale à ∼2 MHz et avec un rapport cyclique de 18 %.

Dans le présent document, on entend par rapport cyclique d'une rafale, le rapport entre la durée d'une rafale sur l'intervalle de temps entre deux rafales successives.

En sortie du sélecteur d'impulsion 3, les impulsions 300 présentent ainsi une fréquence de répétition intra-rafale égale à la première fréquence de répétition F1. Le sélecteur d'impulsion 3 peut sélectionner une seule rafale d'impulsions ou plusieurs rafales d'impulsions successives, avec un intervalle de temps déterminé entre deux rafales successives. Dans un mode de réalisation particulier, le sélecteur d'impulsion 3 sélectionne des rafales périodiques avec un intervalle de temps constant entre rafales successives. Autrement dit, le sélecteur d'impulsion 3 peut opérer avec une fréquence de répétition inter-rafale égale à la troisième fréquence de répétition F3.

Selon un mode de réalisation particulier, le sélecteur d'impulsion 3 est commandé pour moduler l'amplitude des impulsions dans une rafale d'impulsions, suivant une enveloppe définie par l'utilisateur. Par exemple, le sélecteur d'impulsion 3 applique une sélection en créneau à une rafale d'impulsions (ou top hat, en terminologie anglaise). Ainsi, les impulsions de la rafale sélectionnée ont toutes la même amplitude. En alternative, le sélecteur d'impulsion 3 applique une modulation d'amplitude présentant un front de montée, un plateau et un front de descente. Dans ce cas, les impulsions de la rafale sélectionnée ont une amplitude croissante, puis constante, puis décroissante. Selon une autre alternative, le sélecteur d'impulsion 3 applique une modulation d'amplitude en dents de scie, par exemple maximum pour la première impulsion de la rafale puis décroissante pour les impulsions suivantes. L'homme du métier adaptera aisément le profil de la modulation d'amplitude du sélecteur d'impulsion 3 en fonction des applications.

La rafale de M impulsions 300 est injectée dans les amplificateurs optiques 22,..., 2N de puissance. Ainsi, le système amplificateur optique 2 délivre sur la sortie S une rafale d'impulsions laser 500 ayant une fréquence de répétition intra-rafale égale à la première fréquence de répétition F1, et une fréquence de répétition inter-rafale égale à la troisième fréquence de répétition F3. Les amplificateurs optiques de puissance 22, ..., 2N délivrent la même puissance moyenne qu'un train d'impulsions à la première fréquence de répétition F1, mais sur un nombre M limité d'impulsions. Par conséquent, les impulsions amplifiées 500 d'une rafale ont une énergie par impulsion supérieure à l'énergie des impulsions d'un train d'impulsions à la première fréquence de répétition F1, amplifiées par le même système amplificateur optique 2. Dans le cas d'une rafale en forme de créneau (top-hat), l'énergie d'une rafale est alors égale à la puissance divisée par la troisième fréquence de répétition F3 et l'énergie par impulsion dans la rafale est égale à l'énergie de cette rafale divisée par le nombre d'impulsions M dans la rafale.

Ainsi, chaque impulsion de la rafale est amplifiée pour atteindre une énergie entre 10 nJ et quelques µJ en fonction de l'application. Le deuxième mode de réalisation permet ainsi d'augmenter l'énergie par impulsion, sans réduire la première fréquence de répétition intra-rafale F1.

De plus, l'énergie d'une rafale d'impulsions est égale à la somme des énergies de chaque impulsion de la rafale. Considérons d'une part une rafale de -80 impulsions fs ou ps, la rafale d'impulsions ayant une durée de l'ordre de la nanoseconde et, d'autre part, une impulsion laser de durée nanoseconde ayant la même énergie que l'énergie intégrée de la rafale d'impulsions fs ou ps considérée. Toutefois, la durée de chaque impulsion de la rafale étant femtoseconde ou picoseconde, la puissance crête de la rafale d'impulsions est très supérieure à la puissance crête de l'impulsion nanoseconde. Le mode rafale d'impulsions permet de répartir l'énergie en fonction du temps de manière très différente d'une monoimpulsion nanoseconde. Les interactions laser-matière s'en trouvent fortement modifiées.

Ainsi, le deuxième mode de réalisation permet d'augmenter la puissance crête disponible. Le nombre d'impulsions dans une rafale est sélectionné compte tenu des limites du système amplificateur optique.

Or, il semble que l'efficacité d'ablation d'un matériau solide par laser à impulsion dépende non seulement de l'énergie par impulsion, de la durée d'impulsion mais aussi, en mode rafale d'impulsions, de la fréquence de répétition intra-rafale et du rapport cyclique des rafales d'impulsions amplifiées. Ainsi, l'application d'une rafale d'impulsions laser ultrabrèves d'énergie relativement limitée et à très haute fréquence de répétition intra-rafale, F1, peut permettre d'obtenir l'effet d'ablation refroidie (ablation-cooled material removal) et d'augmenter l'efficacité d'ablation du matériau, c'est-à-dire d'augmenter la quantité de matériau enlevé.

Selon une variante, le système laser comporte en outre un modulateur optique 9 de type électro-optique ou acousto-optique disposé en sortie du système amplificateur optique 2. Le modulateur optique 9 peut être utilisé dans un système ne comportant pas de sélecteur d'impulsion 3, illustré par exemple en figure 4. De façon alternative, le modulateur optique 9 est utilisé dans un système comportant un sélecteur d'impulsion 3, illustré par exemple en figures 5-6. Le modulateur optique 9 est commandé pour moduler l'amplitude des impulsions amplifiées, suivant une enveloppe définie par l'utilisateur. Par exemple, le modulateur optique 9 applique une sélection en créneau à une rafale d'impulsions amplifiées. Ainsi, les impulsions amplifiées de la rafale sélectionnée ont toutes la même amplitude. En alternative, le sélecteur d'impulsion 3 applique une modulation d'amplitude présentant un front de montée, un plateau et un front de descente. Dans ce cas, les impulsions amplifiées de la rafale sélectionnée ont une amplitude croissante, puis constante, puis décroissante. Selon une autre alternative, le modulateur optique 9 applique une modulation d'amplitude en dents de scie, par exemple maximum pour la première impulsion de la rafale puis décroissante pour les impulsions suivantes. L'homme du métier adaptera aisément le profil de la modulation d'amplitude du modulateur optique 9 en fonction des applications.

Toutefois, le deuxième mode de réalisation peut présenter des inconvénients pour les amplificateurs optiques de puissance 22, ...2N. En effet, la variation de la période entre deux rafales est susceptible d'introduire des instabilités de gain.

Afin de stabiliser le niveau d'inversion et le gain des amplificateurs optiques de puissance, on propose un troisième mode de réalisation illustré sur la figure 6. Le troisième mode de réalisation comporte en outre une autre source 14, adaptée pour générer un signal secondaire 40, complémentaire de la rafale de M impulsions 300.

Un coupleur 15 permet de combiner la rafale de M impulsions 300 et le signal secondaire 40 en entrée du ou des amplificateurs optiques de puissance.

En sortie du système amplificateur optique 2, un coupleur-séparateur permet de séparer spatialement d'une part, la rafale de M impulsions amplifiées 500, et, d'autre part, le signal secondaire amplifié 400.

Plus précisément, on se place dans des conditions où le signal secondaire 40 est configuré de manière à maintenir dans le ou les amplificateurs optiques de puissance 22,..., 2N l'inversion de population exactement au niveau nécessaire à amplifier la prochaine rafale de M impulsions choisi par l'utilisateur au niveau souhaité d'énergie. Plus précisément, le signal secondaire 40 est modulé temporellement de manière à ce que l'énergie stockée dans le système amplificateur optique de puissance 22, ..., 2N reste au niveau nécessaire à amplifier la prochaine rafale de M impulsions 300 au niveau souhaité d'énergie. Généralement, les impulsions de la rafale d'impulsions et du signal secondaire 40 n'ont pas la même durée et/ou la même énergie. Néanmoins, le signal secondaire 40 est dimensionné de manière à ce que, la combinaison de la rafale de M impulsions 300 et du signal secondaire 40 ait pour effet de maintenir le niveau d'inversion de population de l'amplificateur optique 22,..., 2N à la valeur nécessaire pour extraire l'énergie de rafale souhaité avec la prochaine rafale de M impulsions 300. Ainsi, lorsque le signal secondaire 40 est modulé temporellement de manière à ce que l'intervalle temporel correspondant soit supérieur à l'intervalle temporel séparant deux rafales de M impulsions 300, le gain du système amplificateur optique 22,..., 2N reste constant pour chaque impulsion de la rafale de M impulsions amplifiées 500. Lorsqu'un signal principal constitué d'une rafale de M impulsions 300 sélectionnées est envoyé dans l'amplificateur optique de puissance 22,..., 2N, après une modulation qui retire une ou plusieurs impulsions source, toutes les impulsions sélectionnées de la rafale de M impulsions 300 sont amplifiées avec un même gain.

En pratique, on mesure l'énergie des impulsions de la rafale de M impulsions amplifiées 300 en fonction du temps et on modifie la puissance, l'énergie, la longueur d'onde et/ou la durée des impulsions du signal secondaire 40 injecté de manière à stabiliser l'énergie des impulsions de la rafale de M impulsions amplifiées 300.

Ainsi, les amplificateurs optiques de puissance 22, ..., 2N amplifient simultanément la rafale d'impulsions 30 sélectionnée par le sélecteur 3 d'impulsions et le signal secondaire 40.

De façon avantageuse, la rafale d'impulsions 30 et le signal secondaire 40 présentent un état de polarisation mutuellement transverse. Dans ce cas, le coupleur 19 et le coupleur-séparateur 16 peuvent être à base de composants optiques polarisants.

Dans une variante, la rafale d'impulsions 30 et le signal secondaire 40 ont des longueurs d'onde différentes, situées dans la bande passante du système amplificateur optique 2. Dans cette variante, le coupleur 15 et le coupleur-séparateur 16 peuvent être à base de composants optiques dichroïques.

Le troisième mode de réalisation permet ainsi de stabiliser les amplificateurs optiques de puissance en mode rafale. En option, le système laser comporte en outre un modulateur optique 9 disposé en sortie du coupleur-séparateur 16 de manière à moduler l'amplitude de la rafale de M impulsions amplifiées 500.

Dans un autre mode de réalisation, on combine l'utilisation d'un oscillateur haute fréquence de répétition, d'un système amplificateur optique et d'un multiplicateur de fréquence de répétition.

On connaît du document Can Kerse et al. (« 3.5 GHz intra-burst repetition rate ultrafast Yb-doped fiber laser », Optics Communication 366, 2016, 404-409) un système amplificateur à fibre générant des rafales d'impulsions laser à une fréquence de répétition intra-rafale de 3.5 GHz et une fréquence de répétition des rafales de 1 kHz. L'analyse suivante fait partie de la présente divulgation. Ce système de type MOPA (Master Oscillator Power Amplifier) comporte un oscillateur laser émettant des impulsions laser source à une fréquence de répétition source de 108 MHz, un dispositif multiplicateur de fréquence de répétition 4 à fibre optique passive et un système d'amplificateurs à fibre optique active. Plus précisément, le dispositif multiplicateur de fréquence de répétition 4 comporte six coupleurs 50-50 disposés en série, cinq lignes à retard optiques, chaque ligne à retard optique étant disposée entre deux coupleurs 50-50 consécutifs. Ce dispositif multiplicateur de fréquence de répétition 4 permet de multiplier la fréquence de répétition source par un facteur égal à 2⁵ augmentant ainsi la fréquence de répétition source de 108 MHz à 3.5 GHz. Ce système utilise en outre un pré-amplificateur, un modulateur acousto-optique et 9 étages d'amplificateurs à fibre optique. Le modulateur acousto-optique applique une enveloppe déterminant la forme des rafales d'impulsions à une fréquence de répétition de 1 kHz. Les rafales d'impulsions sont ensuite amplifiées dans les 9 étages d'amplificateurs à fibre optique. Toutefois, ce système requiert de nombreux composants en cascade. De plus, un inconvénient de cette technique est la difficulté de maintenir la stabilité en énergie et en espacement temporel des impulsions de sortie, en particulier à cause d'asymétries entre les branches des coupleurs 50-50. D'autre part, un tel système semble difficilement exploitable dans une gamme de fréquence de répétition supérieure à 3.5 GHz, qui nécessiterait des coupleurs additionnels, des lignes à retard additionnelles de très haute précision et des étages d'amplificateurs supplémentaires.

Les figures 7-8 illustrent un aspect particulier pouvant être combiné à l'un des modes de réalisation décrits ci-dessus. Cet aspect particulier concerne un dispositif multiplicateur de fréquence de répétition par un facteur 2 ou 4. Ce dispositif multiplicateur de fréquence de répétition est destiné à être disposé de préférence entre l'oscillateur 1 et le système amplificateur optique 2. Selon une variante, le dispositif multiplicateur de fréquence de répétition est disposé entre le préamplificateur optique et le système amplificateur optique de puissance. Selon une autre variante, le dispositif multiplicateur de fréquence de répétition est disposé en sortie du système amplificateur optique 2.

Plus précisément, la figure 7 illustre un multiplicateur 4 de fréquence de répétition par un facteur deux ou doubleur de fréquence de répétition. Le multiplicateur 4 de fréquence de répétition comprend un premier coupleur-séparateur optique 41, une première ligne à retard optique 51 et un deuxième coupleur-séparateur optique 42. La première ligne à retard optique 51 est disposée entre le premier coupleur-séparateur optique 41 et le deuxième coupleur-séparateur optique 42. Le multiplicateur 4 de fréquence de répétition reçoit un faisceau laser 100, 200, 500 comprenant des impulsions laser à la première fréquence de répétition F1, chaque impulsion laser ayant une énergie par impulsion notée E. Le premier coupleur-séparateur optique 41 est adapté pour séparer spatialement le faisceau laser 100, 200 ou 500 en un premier faisceau d'impulsions 110 ayant une énergie par pulse égale à E/2 cadencé à la première fréquence de répétition F1 et un second faisceau d'impulsions 120 ayant une énergie par pulse égale à E/2 cadencé à la première fréquence de répétition F1. En sortie du premier coupleur-séparateur optique 41, les deux faisceaux séparés ont les mêmes propriétés, les termes de « premier faisceau d'impulsions » et « second faisceau d'impulsions » sont ici utilisés de manière arbitraire pour les différencier ensuite sans impliquer de notion d'ordre. La première ligne à retard optique 51 est disposée entre le premier coupleur-séparateur optique 41 et le deuxième coupleur-séparateur optique 42 sur un trajet du second faisceau d'impulsions 120. La première ligne à retard optique 51 est adaptée pour induire un retard optique égal à une demi-période de la première fréquence de répétition F1 sur le second faisceau d'impulsions 120 de manière à former un second faisceau d'impulsions 130 retardé temporellement d'une demi-période relativement au premier faisceau d'impulsions 110. Le deuxième coupleur-séparateur optique 42 reçoit le premier faisceau d'impulsions 110 à la première fréquence de répétition F1 et le second faisceau d'impulsions 130, retardé d'une demi-période à la première fréquence de répétition F1. La ligne à retard optique 51 est par exemple constituée par une fibre optique passive de longueur adaptée. Le deuxième coupleur-séparateur optique 42 est par exemple un coupleur optique à 4 entrées-sorties. Le deuxième coupleur-séparateur optique 42 est adapté pour recombiner le premier faisceau 110 et le second faisceau 130 retardé d'une demi-période et pour former sur une première sortie S1 un premier faisceau recombiné 142 dans lequel les impulsions ont une énergie par pulse égale à E/4 et sont cadencées à une deuxième fréquence de répétition F2 égale au double de la première fréquence de répétition F1. De façon particulièrement avantageuse, le deuxième coupleur-séparateur optique 42 peut être adapté pour recombiner le premier faisceau 110 et le second faisceau 130 retardé d'une demi-période et former sur une deuxième sortie S2 un second faisceau recombiné 152 dans lequel les impulsions ont une énergie par pulse égale à E/4 et sont cadencées à la deuxième fréquence de répétition F2 égale au double de la première fréquence de répétition F1. De façon avantageuse, le premier coupleur-séparateur optique 41 et le deuxième coupleur-séparateur optique 42 sont des coupleurs 50/50. Dans ce cas, les deux sorties S1 et S2 sont interchangeables.

Ainsi, le multiplicateur 4 de fréquence de répétition permet de générer un faisceau d'impulsions 142 ayant une fréquence de répétition F2 multipliée par un facteur 2 par rapport à F1, dans lequel l'énergie par impulsion est seulement divisée par quatre. Partant d'un oscillateur source ayant une première fréquence de répétition F1 de 800 MHz, on obtient ainsi un faisceau recombiné 142 et/ou 152 ayant une fréquence de répétition de 2 x 800 MHz = 1,6 GHz. Cette configuration permet en outre de limiter le nombre d'amplificateurs optiques pour obtenir une énergie par pulse adaptée à la gravure du matériau considéré.

On utilise généralement une des deux sorties S1 ou S2 pour amplifier le faisceau d'impulsions à la fréquence de répétition double de la fréquence de répétition de l'oscillateur source dans le système amplificateur optique. En effet, dans la plupart des systèmes amplificateurs optiques, l'amplification doit être effectuée suivant un seul axe optique. Dans ce cas, la puissance de sortie utile de ce dispositif multiplicateur de fréquence de répétition est environ la moitié de la puissance en entrée P, sans compter les pertes d'insertion du dispositif multiplicateur de fréquence de répétition.

La figure 8 illustre un autre exemple de multiplicateur de fréquence et plus précisément un multiplicateur 44 de fréquence de répétition par un facteur 4 ou quadrupleur de fréquence de répétition. Les mêmes signes de référence désignent les mêmes éléments que sur la figure 7. Le multiplicateur 44 de fréquence de répétition comporte en outre un combineur optique 49 et une deuxième ligne à retard optique 52. La deuxième ligne à retard optique 52 est disposé entre le deuxième coupleur-séparateur optique 42 et le combineur optique 49. De façon avantageuse, le deuxième coupleur-séparateur optique 42 comporte quatre entrées-sorties. Le deuxième coupleur-séparateur optique 42 reçoit sur une entrée le premier faisceau d'impulsions 110 à la première fréquence de répétition F1 ayant une énergie par pulse E/2 et sur une autre entrée le second faisceau d'impulsions 130 retardé temporellement d'une demi-période à la première fréquence de répétition F1 et ayant une énergie par pulse E/2. Comme expliqué en lien avec la figure 7, le deuxième coupleur-séparateur optique 42 est adapté pour recombiner le premier faisceau d'impulsions 110 et le second faisceau d'impulsions 130 retardé et pour les séparer spatialement en un premier faisceau recombiné 142 ayant une énergie par pulse égale à E/4 cadencé au double de la première fréquence de répétition (2xF1) et un second faisceau recombiné 152 ayant une énergie par pulse égale à E/4 cadencé au double de la première fréquence de répétition (2xF1). La deuxième ligne à retard optique 52 est disposée sur un trajet du second faisceau recombiné 152. La deuxième ligne à retard optique 52 est adaptée pour induire un retard optique égal à un quart de période de la première fréquence de répétition F1 sur le second faisceau recombiné 152 de manière à former un second faisceau d'impulsions 162 retardé temporellement d'un quart de période relativement au premier faisceau recombiné 142. Le combineur optique 49 reçoit le premier faisceau recombiné 142 cadencé au double de la première fréquence de répétition (2xF1) et le second faisceau d'impulsions 162 retardé temporellement d'un quart de période de la fréquence de répétition F1 et cadencé au double de la première fréquence de répétition (2xF1). Le combineur optique 49 est adapté pour recombiner le premier faisceau recombiné 142 et le second faisceau d'impulsions 162 retardé temporellement d'un quart de période et pour former sur la première sortie S1 un premier faisceau 170 quadruplé en fréquence dans lequel les impulsions ont une énergie par pulse égale à E/8 et sont cadencées à une troisième fréquence de répétition F3 égale au quadruple de la première fréquence de répétition F1. De façon particulièrement avantageuse, le combineur optique 49 peut être adapté pour recombiner le premier faisceau dédoublé 142 et l'autre faisceau dédoublé 162 et former sur la deuxième sortie S2 un second faisceau 180 quadruplé en fréquence dans lequel les impulsions ont une énergie par pulse égale à E/8 et sont cadencées à la troisième fréquence de répétition F3 égale au quadruple de la première fréquence de répétition F1. De façon avantageuse, le combineur optique 49 est un coupleur 50/50. Dans ce cas, les deux sorties S1 et S2 sont interchangeables.

Ainsi, le multiplicateur 44 de fréquence de répétition permet de générer au moins un faisceau d'impulsions 170, 180 ayant une troisième fréquence de répétition F3 multipliée par un facteur 4 par rapport à F1, dans lequel l'énergie par impulsion est seulement divisée par huit. Partant d'un oscillateur source ayant une première fréquence de répétition F1 de 800 MHz, on obtient ainsi un faisceau recombiné ayant une fréquence de répétition de 4 x 800 MHz = 3,2 GHz.

Ainsi, la fréquence de répétition peut être multipliée par un facteur 2 ou 4. Les pertes d'insertion des composants à ajouter (lignes à retard 51, 52 et combineurs 50/50) restent limitées par le faible nombre de composants. Ainsi, on choisit de limiter le multiplicateur de fréquence de répétition à un doubleur ou quadrupleur de fréquence de répétition afin de limiter le nombre de coupleurséparateurs optique 41, 42, de combineur optique 49 et de lignes à retard optique 51, 52.

La puissance de sortie utile de ce dispositif quadrupleur de fréquence de répétition est environ la moitié de la puissance P en entrée, comme dans le cas du doubleur de fréquence de répétition, sans compter les pertes d'insertion du dispositif multiplicateur de fréquence de répétition, soit une puissance comparable à celle obtenue avec un dispositif doubleur de fréquence de répétition.

En général, l'oscillateur 1 est polarisé linéairement. Par conséquent, les des impulsions source 100, les impulsions amplifiées 200, et, respectivement les impulsions d'une rafale d'impulsions 500 sont polarisées linéairement.

Dans un mode de réalisation, le premier coupleur-séparateur optique 41, le deuxième coupleur-séparateur optique 42 et le combineur optique 49 sont des coupleurs isotropes, qui n'affectent pas l'état de polarisation des signaux d'entrée ni de sortie. De façon alternative, le premier coupleur-séparateur optique 41, le deuxième coupleur-séparateur optique 42 et le combineur optique 49 sont des coupleurs polarisants ou à maintien de polarisation (PM). Dans ce cas, ces coupleurs sont configurés et orientés de manière à ne pas modifier la polarisation des signaux d'entrée polarisés et à fournir un rapport de séparation de 50/50 pour la polarisation du signal d'entrée. Cette configuration peut être utilisée de façon astucieuse dans des systèmes amplificateurs isotropes ou ayant les mêmes facteurs d'amplification suivant les deux axes de polarisation. En effet, on peut utiliser simultanément le premier faisceau 170 quadruplé en fréquence sur la première sortie S1 et le second faisceau 180 quadruplé en fréquence sur la deuxième sortie S2. Par exemple, on utilise une lame demi-onde pour tourner de 90 degrés la polarisation du premier faisceau 170 quadruplé en fréquence ou du second faisceau 180 quadruplé en fréquence et un polariseur pour combiner les deux polarisations. Le faisceau recombiné peut ensuite être amplifié dans un amplificateur optique isotrope ou dans une chaine d'amplificateurs optiques isotropes. Les pertes en énergie, situées à l'entrée de la chaîne d'amplificateurs, n'ont qu'un impact limité sur l'énergie finale du dispositif.

De façon alternative, on peut utiliser le second faisceau recombiné 180 sur la deuxième sortie S2 pour l'amplifier dans un autre système amplificateur optique similaire disposé en parallèle pour ainsi disposer de deux sources GHz quasi-identiques et synchrones.

Selon une autre alternative, on amplifie le premier faisceau recombiné 142 et le second faisceau d'impulsions 162 retardé temporellement d'un quart de période avant de les recombiner. On peut alors utiliser simultanément le premier faisceau 170 quadruplé en fréquence sur la première sortie S1 et le second faisceau 180 quadruplé en fréquence sur la deuxième sortie S2. De façon avantageuse, on dispose un compresseur d'impulsion uniquement sur la première sortie S1, de façon à obtenir des impulsions à la même fréquence de répétition, mais ayant des durées d'impulsion différentes sur la première sortie S1 et sur la deuxième sortie S2. Ces impulsions de durée différentes sont avantageusement recombinées spatialement, avec ou sans décalage latéral prédéterminé, sur un même échantillon.

Dans une application particulière, on utilise le premier faisceau recombiné 170 sur la première sortie S1 et le second faisceau recombiné 180 sur la deuxième sortie S2 pour un diagnostic in situ suivant une configuration pompe-sonde.

Dans les cas où la cadence optimale pour l'usinage d'un matériau est plus élevée que la cadence de l'oscillateur source, la solution de séparation et recombinaison temporelle peut être appliquée, avec une complexité réduite significativement grâce à une cadence d'oscillateur source déjà très élevée. Par ex., partant d'un oscillateur à 500MHz (période de 2ns entre chaque impulsion), une cadence de 1 GHz environ peut être réalisée avec une séparation des pulses 50/50, une ligne à retard optique pour retarder une des impulsions par une demi-période et un dispositif de recombinaison. La recombinaison peut soit être effectuée de façon spatiale, soit par polarisation. La recombinaison par polarisation peut être réalisée essentiellement sans pertes de puissance, mais l'état de polarisation bien défini sera perdu. La recombinaison spatiale peut être réalisée par exemple via un coupleur 50/50. Cette recombinaison est seulement possible en sacrifiant de la puissance, car 50% de la lumière incidente part sur la première sortie S1 et 50 % sur la deuxième sortie S2. Néanmoins, cette méthode reste privilégiée grâce à sa flexibilité. La perte de 50% dans la partie très basse puissance du système laser peut être acceptée sans impact significatif sur le rendement du système laser complet.

La ou les lignes à retard optique 51, 52 sont d'autant plus difficiles à contrôler que la fréquence de répétition de sortie est élevée. En pratique, le dispositif multiplicateur de fréquence de répétition permet d'atteindre une fréquence de répétition allant jusqu'à 10 GHz ou plus.

Le dispositif multiplicateur de fréquence de répétition permet avantageusement de disposer de deux sorties S1, S2 délivrant chacune un faisceau d'impulsions laser à la même fréquence de répétition. Un tel dispositif permet des applications de laser pompe-sonde en utilisant la première sortie pour former par exemple un faisceau laser dit de pompe et la première sortie pour former un faisceau laser dit de sonde.

L'oscillateur source 1 ayant une très haute cadence permet de limiter le nombre de séparations et recombinaison à 2 ou 4, tout en accédant à une fréquence de répétition dans le domaine multi-GHz. On obtient ainsi un système laser générant des impulsions ultra-brèves à une deuxième fréquence répétition F2 dans le domaine GHz.

Comme détaillé plus haut, on peut aussi générer une rafale d'impulsions ayant une fréquence de répétition intra-rafale dans le domaine GHz, en utilisant un sélecteur 3 d'impulsions. On peut ainsi générer des rafales périodiques d'impulsions ayant une fréquence de répétition intra-rafale dans le domaine GHz et une fréquence de répétition inter-rafale comprise entre 100 Hz et 100 MHz. Les impulsions ont une cadence GHz et une puissance comprise entre environ 1 W et 1000 W, et de préférence de l'ordre de quelques 10 à 100 W.

Selon un mode de réalisation, le sélecteur 3 d'impulsions est disposé en amont du multiplicateur de fréquence de répétition 4 ou 44. Dans ce cas, la séparation entre deux impulsions incidentes sur le sélecteur 3 d'impulsions est suffisamment grande (environ 1 à 2 ns) pour permettre un contrôle pulse-à-pulse avec un très bon contraste. Le sélecteur 3 d'impulsions sélectionne ainsi un nombre déterminé d'impulsions. Le multiplicateur de fréquence de répétition 4, 44 génère alors une rafale d'impulsions comprenant un multiple du nombre d'impulsions sélectionné par le sélecteur d'impulsions, la rafale ayant une forme quasi-plate (ou tophat).

Dans une variante pouvant être combinée avec l'un quelconque des modes de réalisation décrits ci-dessus, un autre modulateur optique 9 est disposé en aval du multiplicateur 4 ou 44 de fréquence de répétition. Le modulateur optique 9 est de type acousto-optique ou électro-optique avec un contrôle analogique d'amplitude. Le modulateur optique 9 permet de moduler l'amplitude des impulsions de sortie ou de sélectionner des rafales d'impulsions. La période entre deux impulsions incidentes sur le modulateur optique 9 est alors réduite par un facteur deux ou quatre par rapport à la période des impulsions source. Dans ce cas, le modulateur optique 9 est susceptible d'être trop lent pour sélectionner une rafale en forme de créneau (ou top-hat) lorsque le temps de montée du modulateur optique 9 est supérieur à la période entre deux impulsions incidentes sur le modulateur optique 9.

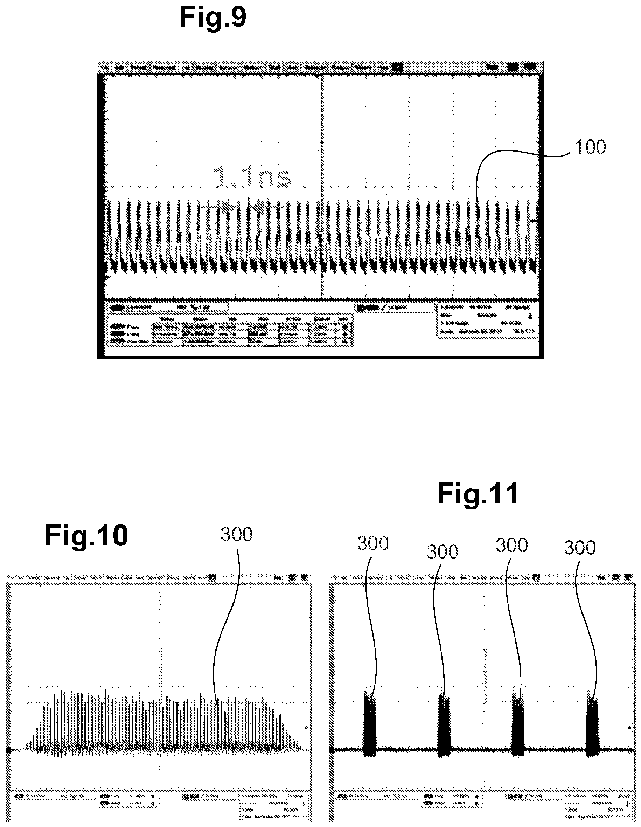

La figure 9 illustre une mesure d'un faisceau d'impulsions source 100 en sortie d'un oscillateur laser à blocage de modes tel que représenté sur la figure 2 ou 3. L'oscillateur laser à blocage de modes génère des impulsions source ayant une première fréquence de répétition F1 de ∼ 900 MHz. La période entre deux impulsions laser successives est de l'ordre de 1,1 ns. La durée des impulsions est de l'ordre de 200 fs. La durée des impulsions peut être plus courte, par exemple de l'ordre de 100 fs ou même inférieure à 100 fs.

Les figures 10-11 illustrent un exemple de génération de rafales d'impulsions laser de forte énergie à très haute cadence à partir des impulsions source de la figure 9. On utilise un système laser tel que représenté schématiquement sur la figure 5. La figure 10 montre une rafale d'environ 80 impulsions issue de l'oscillateur et amplifiée dans un système amplificateur à fibre optique active. La figure 11 montre une série de rafales d'impulsions laser avec une fréquence de répétition inter-rafale de 2 MHz, un rapport cyclique d'environ 18%, la puissance en sortie du système amplificateur à fibre optique active étant de l'ordre de 20W, et la durée des impulsions amplifiées de ∼200fs.

Un système laser à impulsions selon l'un des modes de réalisation décrit ci-dessus trouve de nombreuses applications, en particulier dans l'ablation de matériaux solides tels que verre, un semiconducteur comme par exemple du silicium ou un métal, comme par exemple du cuivre, de l'aluminium ou de l'inox. Des matériaux polymère ou biologiques (cornée, dentine, ...) peuvent également être soumis à un tel traitement laser.

L'invention trouve notamment des applications pour l'ablation de divers matériaux solides à une cadence de l'ordre du GHz ou supérieure à 1 GHz, ou même supérieure à 10 GHz ou 20 GHz, pour permettre d'obtenir une ablation dite refroidie.

De façon avantageuse, on utilise un système optique non-linéaire doubleur de fréquence optique ou tripleur de fréquence optique pour convertir la longueur d'onde du faisceau d'impulsions par doublage ou triplage de fréquence optique en sortie du système laser très haute cadence selon l'un quelconque des modes de réalisation décrits ci-dessus.

Un tel système laser permet d'augmenter la productivité tout en maintenant la qualité de l'ablation et la précision de l'usinage femtoseconde (ou picoseconde). En effet, ce système laser permet d'optimiser le dépôt d'énergie dans de la matière, en générant une rafale ayant une fréquence de répétition intra-rafale (ou deuxième fréquence de répétition F2) supérieure au GHz. De plus, le système laser permet de contrôler le dépôt d'énergie dans la matière par l'apport successif d'énergie de M impulsions à très haute cadence dans une rafale, éventuellement dans un train d'impulsions à plus faible cadence. Enfin, le système laser permet de contrôler et d'optimiser le dépôt d'énergie en fonction du matériau avec lequel on souhaite interagir en adaptant les différents paramètres suivants : cadence des pulses dans une rafale (ou écart temporel entre les impulsions dans la rafale), nombre d'impulsions dans une rafale et/ou cadence du train d'impulsion.

Le système laser de l'invention est adapté pour des applications industrielles exigeantes sur le plan de la robustesse et la fiabilité. De plus, le système laser est particulièrement compact, puisqu'il est basé essentiellement sur des composants peu encombrants (cristal amplificateur à barreau, à plaque ou à disque mince) et/ou des composants à fibre optique.

Le procédé de génération d'impulsions laser avec une fréquence de répétition au delà du GHz est en particulier adapté à la mise en œuvre d'une augmentation de l'efficacité d'ablation de matériaux solides par laser.

## Revendications

1. Système laser très haute cadence qui comporte:
- un oscillateur (1) à blocage de mode apte à générer un faisceau laser source comprenant une série d'impulsions source (100) de durée femtoseconde ou picoseconde à une première fréquence de répétition (F1),
- un système amplificateur optique (2) adapté pour recevoir et amplifier la série d'impulsions source (100) à une deuxième fréquence de répétition (F2) multiple de la première fréquence de répétition (F1), le multiple étant un nombre entier naturel supérieur ou égal à deux, de manière à générer une série d'impulsions laser de très haute fréquence de répétition comportant en outre un dispositif multiplicateur de fréquence de répétition (4, 44) disposé entre l'oscillateur (1) et le système amplificateur optique (2), le dispositif multiplicateur de fréquence de répétition (4, 44) comprenant un premier coupleur-séparateur optique (41), une première ligne à retard optique (51) et un deuxième coupleur-séparateur optique (42) ayant une première sortie (S1), le premier coupleur-séparateur optique (41) étant adapté pour séparer spatialement le faisceau laser source (100) en un premier faisceau d'impulsions (110) à la première fréquence de répétition (F1) et un second faisceau d'impulsions (120) à la première fréquence de répétition (F1), la première ligne à retard optique (51) étant disposée entre le premier coupleur-séparateur optique (41) et deuxième coupleur-séparateur optique (42) sur un trajet du second faisceau d'impulsions (120) à la première fréquence de répétition (F1), dans lequel la première ligne à retard optique (51) est adaptée pour induire un retard optique égal à une demi-période de la première fréquence de répétition (F1) sur le second faisceau d'impulsions (120) et générer un second faisceau d'impulsions retardé d'une demi-période (130), et le deuxième coupleur-séparateur optique (42) étant adapté pour recombiner le premier faisceau (110) et le second faisceau retardé d'une demi-période (130) et former sur la première sortie (S1) un premier faisceau recombiné (142) dans lequel les impulsions sont cadencées à la deuxième fréquence de répétition (F2) égale au double de la première fréquence de répétition (F1), **caractérisé en ce que** la première fréquence de répétition est supérieure ou égale à 800 mégahertz.

2. Système laser selon la revendication 1, dans lequel le deuxième coupleur-séparateur optique (42) comporte une deuxième sortie (S2), le deuxième coupleur-séparateur optique (42) étant adapté pour former sur la deuxième sortie (S2) un second faisceau recombiné (152) comprenant des impulsions à la deuxième fréquence de répétition (F2) égale au double de la première fréquence de répétition (F1), le premier faisceau recombiné (142) et le second faisceau recombiné (152) étant synchronisés entre eux en sortie du deuxième coupleur-séparateur optique (42).

3. Système laser selon la revendication 2 dans lequel le dispositif multiplicateur de fréquence de répétition (44) comprend une deuxième ligne à retard optique (52) et un combineur optique (49) ayant une première sortie, la deuxième ligne à retard optique (52) étant disposée entre le deuxième coupleur-séparateur optique (42) et le combineur optique (49) sur un trajet du second faisceau recombiné (152), la deuxième ligne à retard optique (52) étant adaptée pour induire un retard optique égal à un quart de période de la première fréquence de répétition (F1) sur le second faisceau recombiné (152) et générer un second faisceau d'impulsions retardé d'un quart de période (162), et le combineur optique (49) étant adapté pour recombiner le premier faisceau recombiné (142) et le second faisceau d'impulsions retardé d'un quart de période (162) et former sur sa première sortie un premier faisceau quadruplé en fréquence de répétition (170) comprenant des impulsions à une troisième fréquence de répétition (F3) égale au quadruple de la première fréquence de répétition (F1).

4. Système laser selon la revendication 3, dans lequel le combineur optique (49) comporte une deuxième sortie, le combineur optique (49) étant adapté pour former sur sa deuxième sortie un second faisceau quadruplé en fréquence de répétition (180) comprenant des impulsions à la troisième fréquence de répétition (F3) égale au quadruple de la première fréquence de répétition (F1), le premier faisceau quadruplé en fréquence de répétition (170) et le second faisceau quadruplé en fréquence de répétition (180) étant synchronisés entre eux en sortie du combineur optique (49).

5. Système laser selon la revendication 2 ou, respectivement, 4 dans lequel le premier coupleur-séparateur optique (41), le deuxième coupleur-séparateur optique (42) et, respectivement, le combineur optique (49) sont des coupleurs polarisants ou à maintien de polarisation, et comportant en outre un dispositif polariseur adapté pour combiner le premier faisceau recombiné (142) et le second faisceau recombiné (152) ou, respectivement, le premier faisceau quadruplé en fréquence de répétition (170) et le second faisceau quadruplé en fréquence de répétition (180).

6. Système laser selon la revendication 2 comportant en outre un compresseur d'impulsions (8) disposé sur la première sortie (S1) du deuxième coupleur-séparateur optique (42) et/ou un autre compresseur d'impulsions disposé sur la deuxième sortie (S2) du deuxième coupleur-séparateur optique (42).

7. Système laser selon la revendication 4 comportant en outre un compresseur d'impulsions (8) disposé sur la première sortie du combineur optique (49) et/ou un autre compresseur d'impulsions (8) disposé sur la deuxième sortie du combineur optique (49).

8. Système laser selon l'une des revendications 1 à 7 dans lequel l'oscillateur (1) à blocage de mode est choisi parmi : un oscillateur semiconducteur ou un oscillateur à état solide, un oscillateur hybride ou un oscillateur à fibre optique.

9. Système laser selon l'une des revendications 1 à 8 dans lequel le système amplificateur optique (2) comporte un amplificateur optique (21) ou une pluralité d'amplificateurs optiques (21, 22, ..., 2N) choisis parmi les types d'amplificateurs optiques suivants : amplificateur à fibre optique active et/ou amplificateur à cristal.

10. Système laser selon l'une des revendications 1 à 9 dans lequel le système amplificateur optique (2) comporte une pluralité d'amplificateurs optiques (21, 22, ..., 2N) disposés en cascade, la pluralité d'amplificateurs optiques (21, 22, ..., 2N) comportant un amplificateur optique de puissance

11. Système laser selon l'une des revendications 1 à 10 comportant un système optique non-linéaire doubleur de fréquence optique ou leur de fréquence optique.

12. Système laser selon t'une des revendications 1 à 11 comportant en outre un sélecteur (3) d'impulsions disposé en aval de l'oscillateur (1) et en amont du système amplificateur optique (2) ou, respectivement, de l'amplificateur optique de puissance (22, 2N), le sélecteur (3) d'impulsions étant adapté pour sélectionner et/ou moduler en amplitude une rafale d'impulsions (30) et injecter la rafale d'impulsions dans le système amplificateur optique (2) ou, respectivement, dans l'amplificateur optique de puissance (22, 2N).

13. Système laser selon la revendication 12 comportant en outre une autre source (14) adaptée pour générer un faisceau d'impulsions complémentaires (40) de la rafale d'impulsions (30) et un autre coupleur (15) disposé de manière à recevoir et combiner le faisceau secondaire et la rafale d'impulsions source en un faisceau d'impulsions composite ayant une fréquence de répétition égale à une fréquence de répétition intra-rafale de la rafale d'impulsions, l'autre coupleur (15) étant adapté pour injecter le faisceau d'impulsions composite dans le système amplificateur optique (2) ou dans l'amplificateur optique de puissance (22, 2N).

14. Système laser selon l'une des revendications 1 à 13 comportant en outre un modulateur optique (9) disposé en aval du système amplificateur optique (2), le modulateur optique (9) étant adapté pour sélectionner une rafale ou une pluralité de rafales d'impulsions amplifiées (200) et/ou pour moduler en amplitude la rafale ou la pluralité de rafales d'impulsions amplifiées.

15. Procédé de génération d'impulsions laser de très haute cadence, comprenant les étapes suivantes :
- génération d'une série d'impulsions source (100) de durée femtoseconde ou picoseconde par un oscillateur (1) ayant une première fréquence de répétition (F1) et
- amplification optique de la série d'impulsions source à une deuxième fréquence de répétition (F2) multiple de la première fréquence de répétition (F1), le multiple étant un nombre entier naturel supérieur ou égal à deux, de manière à générer une série d'impulsions laser (140, 150, 170, 180) de très haute cadence ;
- séparation spatiale du faisceau laser source (100) en un premier faisceau d'impulsions (110) à la première fréquence de répétition (F1) et un second faisceau d'impulsions (120) à la première fréquence de répétition (F1) ;
- induire un retard optique égal à une demi-période de la première fréquence de répétition (F1) sur le second faisceau d'impulsions (120) de manière à générer un second faisceau d'impulsions retardé d'une demi-période (130) ;
- recombinaison du premier faisceau (110) et du second faisceau retardé d'une demi-période (130) et formation d'un premier faisceau recombiné (142) dans lequel les impulsions sont cadencées à la deuxième fréquence de répétition (F2) égale au double de la première fréquence de répétition (F1), **caractérisé en ce que** la première fréquence de répétition est supérieure ou égale à 800 mégahertz.

## Patentansprüche

1. Lasersystem sehr hoher Wiederholungsrate, das folgendes aufweist:
- einen Oszillator (1) mit Modusblockierung, der geeignet ist, einen Quellenlaserstrahl zu erzeugen, der eine Reihe Quellenimpulse (100) mit einer Femtosekunden- oder Pikosekundendauer bei einer ersten Wiederholungsrate (F1) aufweist,
- ein optisches Verstärkersystem (2), das dazu ausgelegt ist, die Reihe Quellenimpulse (100) bei einer zweiten Wiederholungsrate (F2) zu empfangen und zu verstärken, die ein Vielfaches der ersten Wiederholungsrate (F1) ist, wobei das Vielfache eine ganze natürliche Zahl größer als oder gleich zwei ist, um eine Reihe Laserimpulse mit sehr großer Wiederholungsrate zu erzeugen, und das außerdem eine Vorrichtung (4, 44) zur Vervielfachung der Wiederholungsrate aufweist, die zwischen dem Oszillator (1) und dem optischen Verstärkersystem (2) angeordnet ist, wobei die Vorrichtung (4, 44) zur Vervielfachung der Wiederholungsrate einen ersten optischen Koppler-Trenner (41), eine erste optische Verzögerungsleitung (51) und einen zweiten optischen Koppler-Trenner (42) mit einem ersten Ausgang (S1) aufweist, wobei der erste optische Koppler-Trenner (41) dazu ausgelegt ist, den Quellenlaserstrahl (100) räumlich in einen ersten Strahl (110) von Impulsen mit der ersten Wiederholungsrate (F1) und einen zweiten Strahl (120) von Impulsen mit der ersten Wiederholungsrate (F1) zu trennen, wobei die erste optische Verzögerungsleitung (51) zwischen dem ersten optischen Koppler-Trenner (41) und dem zweiten optischen Koppler-Trenner (42) auf einem Weg des zweiten Strahls (120) von Impulsen mit der ersten Wiederholungsrate (F1) angeordnet ist, wobei die erste optische Verzögerungsleitung (51) dazu ausgelegt ist, beim zweiten Strahl (120) von Impulsen eine optische Verzögerung zu bewirken, die gleich einer halben Periode der ersten Wiederholungsrate (F1) ist, und wobei der zweite optische Koppler-Trenner (42) dazu ausgelegt ist, den ersten Strahl (110) und den um eine halbe Periode verzögerten Strahl (130) zu rekombinieren und am ersten Ausgang (S1) einen ersten rekombinierten Strahl (142) zu bilden, bei dem die Impulse mit der zweiten Wiederholungsrate (F2) gestaffelt sind, die gleich dem Doppelten der ersten Wiederholungsrate (F1) ist, **dadurch gekennzeichnet, daß** die erste Wiederholungsrate größer als oder gleich 800 MHz ist.

2. Lasersystem gemäß Anspruch 1, bei dem der zweite optische Koppler-Trenner (42) einen zweiten Ausgang (S2) aufweist, wobei der zweite optische Koppler-Trenner (42) dazu ausgelegt ist, am zweiten Ausgang (S2) einen zweiten rekombinierten Strahl (152) zu bilden, der Impulse mit der zweiten Wiederholungsrate (F2), die gleich dem Doppelten der ersten Wiederholungsrate (F1) ist, aufweist, wobei der erste rekombinierte Strahl (142) und der zweite rekombinierte Strahl (152) am Ausgang des zweiten Kopplers-Trenners (42) miteinander synchronisiert sind.

3. Lasersystem gemäß Anspruch 2, bei dem die Vorrichtung (44) zum Vervielfachen der Wiederholungsrate eine zweite optische Verzögerungsleitung (52) und einen optischen Kombinierer (49) mit einem ersten Ausgang aufweist, wobei die zweite optische Verzögerungsleitung (52) zwischen dem zweiten optischen Koppler-Trenner (42) und dem optischen Kombinierer (49) auf einem Weg des zweiten rekombinierten Strahls (152) angeordnet ist, wobei die zweite optische Verzögerungsleitung (52) dazu ausgelegt ist, beim zweiten rekombinierten Strahl (152) eine optische Verzögerung zu bewirken, die gleich einer viertel Periode der ersten Wiederholungsrate (F1) ist, und einen zweiten, um eine viertel Periode verzögerten Strahl (162) von Impulsen zu erzeugen, und wobei der optische Kombinierer (49) dazu ausgelegt ist, den ersten rekombinierten Strahl (142) und den um eine viertel Periode verzögerten zweiten Strahl (162) von Impulsen zu rekombinieren und an seinem ersten Ausgang einen ersten Strahl (170) mit vierfacher Wiederholungsrate zu bilden, der Impulse mit einer dritten Wiederholungsrate (F3) aufweist, die gleich dem Vierfachen der ersten Wiederholungsrate (F1) ist.

4. Lasersystem gemäß Anspruch 3, bei dem der optische Kombinierer (49) einen zweiten Ausgang aufweist, wobei der optische Kombinierer (49) dazu ausgelegt ist, an seinem zweiten Ausgang einen zweiten Strahl (180) mit vierfacher Wiederholungsrate zu bilden, der Impulse mit der dritten Wiederholungsrate (F3) aufweist, die gleich dem Vierfachen der ersten Wiederholungsrate (F1) ist, wobei der erste Strahl (170) mit vervierfachter Wiederholungsrate und der zweite Strahl (180) mit vervierfachter Wiederholungsrate am Ausgang des optischen Kombinierers (49) miteinander synchronisiert sind.

5. Lasersystem gemäß Anspruch 2 beziehungsweise 4, bei dem der erste optische Koppler-Trenner (41), der zweite optische Koppler-Trenner (42) beziehungsweise der optische Kombinierer (49) polarisierende oder eine Polarisation aufrechterhaltende Koppler sind, und außerdem eine polarisierende Vorrichtung aufweisen, die dazu ausgelegt ist, den ersten rekombinierten Strahl (142) und den zweiten rekombinierten Strahl (152) beziehungsweise den ersten Strahl (170) mit vervierfachter Wiederholungsrate und den zweiten Strahl (180) mit vervierfachter Wiederholungsrate zu rekombinieren.

6. Lasersystem gemäß Anspruch 2, das außerdem einen am ersten Ausgang (S1) des zweiten optischen Kopplers-Trenners (42) angeordneten Impulskompressor (8) und/oder einen weiteren, am zweiten Ausgang (S2) des zweiten optischen Kopplers-Trenners (42) angeordneten Impulskompressor aufweist.

7. Lasersystem gemäß Anspruch 4, das außerdem einen am ersten Ausgang des optischen Kombinierers (49) angeordneten Impulskompressor (8) und/oder einen weiteren, am zweiten Ausgang des optischen Kombinierers (49) angeordneten Impulskompressor (8) aufweist.

8. Lasersystem gemäß einem der Ansprüche 1 bis 7, bei dem der Oszillator (1) mit Modusblockierung aus einem Halbleiteroszillator oder einem Feststoffoszillator oder einem Hybridoszillator oder einem Lichtleitoszillator ausgewählt ist.

9. Lasersystem gemäß einem der Ansprüche 1 bis 8, bei dem das optische Verstärkersystem (2) einen optischen Verstärker (21) oder eine Anzahl optischer Verstärker (21, 22, ..., 2N) aufweist, die aus den folgenden Typen optischer Verstärker ausgewählt ist: Verstärker mit aktiver Lichtleitfaser und/oder Kristallverstärker.

10. Lasersystem gemäß einem der Ansprüche 1 bis 9, bei dem das optische Verstärkersystem (2) eine Anzahl als Kaskade angeordneter optischer Verstärker (21, 22, ..., 2N) aufweist, wobei die Anzahl optischer Verstärker (21, 22, ..., 2N) einen optischen Leistungsverstärker aufweist.

11. Lasersystem gemäß einem der Ansprüche 1 bis 10, das ein nichtlineares optisches System zur Verdopplung der optischen Frequenz oder zur Verdreifachung der optischen Frequenz aufweist.

12. Lasersystem gemäß einem der Ansprüche 1 bis 11, das außerdem einen nach dem Oszillator (1) und vor dem optischen Verstärkersystem (2) beziehungsweise dem optischen Leistungsverstärker (22, 2N) angeordneten Impulswähler (3) aufweist, wobei der Impulswähler (3) dazu ausgelegt ist, eine Impulsfolge (30) amplitudenmäßig auszuwählen und/oder zu modulieren und die Impulsfolge in das optische Verstärkersystem (2) beziehungsweise in den optischen Leistungsverstärker (22, 2N) einzuspeisen.

13. Lasersystem gemäß Anspruch 12, das außerdem eine weitere Quelle (14), die zum Erzeugen eines Strahls (40) von zur Impulsfolge (30) komplementären Impulsen ausgelegt ist, und einen weiteren Koppler (15), der so angeordnet ist, daß er den Sekundärstrahl und die Folge von Quellenimpulsen empfängt und zu einem zusammengesetzten Strahl von Impulsen kombiniert, die eine Wiederholungsrate haben, die gleich einer inneren Wiederholungsrate der Impulsfolge ist, wobei der andere Koppler (15) dazu ausgelegt ist, den zusammengesetzten Strahl von Impulsen in das optische Verstärkersystem (2) oder in den optischen LeistungsVerstärker (22, 2N) einzuspeisen.

14. Lasersystem gemäß einem der Ansprüche 1 bis 13, das außerdem einen nach dem optischen Verstärkersystem (2) angeordneten optischen Modulator (9) aufweist, wobei der optische Modulator (9) dazu ausgelegt ist, eine Folge oder eine Anzahl Folgen (200) verstärkter Impulse auszuwählen und/oder die Folge oder die Anzahl Folgen verstärkter Impulse amplitudenmäßig zu modulieren.

15. Verfahren zur Erzeugung von Laserpulsen mit sehr hoher Wiederholungsrate, das die folgenden Schritte aufweist:
- Erzeugen einer Reihe Quellenimpulse (100) mit einer Femtosekunden- oder Pikosekundendauer durch einen Oszillator (1), der eine erste Wiederholungsrate (F1) aufweist, und
- optisches Verstärken der Reihe Quellenimpulse (100) bei einer zweiten Wiederholungsrate (F2), die ein Vielfaches der ersten Wiederholungsrate (F1) ist, wobei das Vielfache eine ganze natürliche Zahl größer als oder gleich zwei ist, um eine Reihe Laserimpulse (140, 150, 170, 180) mit sehr großer Wiederholungsrate zu erzeugen,
- räumliches Trennen des Quellenlaserstrahls (100) in einen ersten Strahl (110) von Impulsen mit der ersten Wiederholungsrate (F1)und einen zweiten Strahl (120) von Impulsen mit der ersten Wiederholungsrate (F1),
- Bewirken einer optischen Verzögerung beim zweiten Strahl (120) von Impulsen, die gleich einer halben Periode der ersten Wiederholungsrate (F1) ist, um einen um eine halbe Periode verzögerten Strahl (130) zu erzeugen,
- Rekombinieren des ersten Strahls (110) und des um eine halbe Periode verzögerten zweiten Strahls (130) und Bilden eines ersten rekombinierten Strahls (142), bei dem die Impulse mit der zweiten Wiederholungsrate (F2) gestaffelt sind, die gleich dem Doppelten der ersten Wiederholungsrate (F1) ist, **dadurch gekennzeichnet, daß** die erste Wiederholungsrate größer als oder gleich 800 MHz ist.

## Claims

1. A very high-rate laser system that includes:
- a mode-locking oscillator (1) adapted to generate a source laser beam comprising a series of source pulses (100) of femtosecond or picosecond duration, at a first repetition frequency (F1), and
- an optical amplifier system (2) adapted to receive and amplify the series of source pulses (100) to a second repetition frequency (F2) multiple of the first repetition frequency (F1), the multiple being a natural integer number higher than or equal to two, so as to generate a series of laser pulses of very high repetition frequency, further including a repetition frequency multiplier device (4, 44) arranged between the oscillator (1) and the optical amplifier system (2), the repetition frequency multiplier device (4, 44) comprising a first optical coupler-splitter (41), a first optical delay line (51) and a second optical coupler-splitter (42) having a first output (S1), the first optical coupler-splitter (41) being adapted to spatially split the source laser beam (100) into a first pulse beam (110) at the first repetition frequency (F1) and a second pulse beam (120) at the first repetition frequency (F1), the first optical delay line (51) being arranged between the first optical coupler-splitter (41) and the second optical coupler-splitter (42) on a trajectory of the second pulse beam (120) at the first repetition frequency (F1), the first optical delay line (51) being adapted to induce an optical delay equal to a half-period of the first repetition frequency (F1) on the second pulse beam (120) and to generate a second pulse beam (130) delayed by a half-period, and the second optical coupler-splitter (42) being adapted to recombine the first beam (110) and the second beam (130) delayed by a half-period, and to form on the first output (S1) a first recombined beam (142) in which the pulses are rated at the second repetition frequency (F2) equal to twice the first repetition frequency (F1), **characterized in that** the first repetition frequency (F1) is higher than or equal to 800 megahertz.

2. The laser system according to claim 1, wherein the second optical coupler-splitter (42) has a second output (S2), the second optical coupler-splitter (42) being adapted to form on the second output (S2) a second recombined beam (152) comprising pulses at the second repetition frequency (F2) equal to twice the first repetition frequency (F1), the first recombined beam (142) and the second recombined beam (152) being synchronized between each other at the output of the second optical coupler-splitter (42).

3. The laser system according to claim 2, wherein the repetition frequency multiplier device (44) comprises a second optical delay line (52) and an optical combiner (49) having a first output, the second optical delay line (52) being arranged between the second optical coupler-splitter (42) and the optical combiner (49) on a trajectory of the second pulse beam (152), the second optical delay line (52) being adapted to induce an optical delay equal to a quarter of period of the first repetition frequency (F1) on the second recombined beam (152) and to generate a second pulse beam delayed by a quarter of period (162), and the optical combiner (49) being adapted to recombine the first recombined beam (142) and the second pulse beam (162) delayed by a quarter of period, and to form on its first output a first quadruple-repetition frequency beam (170) comprising pulses at a third repetition frequency (F3) equal to the quadruple of the first repetition frequency (F1).

4. The laser system according to claim 3, wherein the optical combiner (49) has a second output, the optical combiner (49) being adapted to form on its second output a second quadruple-repetition frequency beam (180) comprising pulses at the third repetition frequency (F3) equal to the quadruple of the first repetition frequency (F1), the first quadruple-repetition frequency beam (170) and the second quadruple-repetition frequency beam (180) being synchronized between each other at the output of the optical combiner (49).

5. The laser system according to claim 2 or, respectively, 4, wherein the first optical coupler-splitter (41), the second optical coupler-splitter (42) and, respectively, the optical combiner (49) are polarizing or polarization-maintaining couplers, and further including a polarizer device adapted to combine the first recombined beam (142) and the second recombined beam (152) or, respectively, the first quadruple-repetition frequency beam (170) and the second quadruple-repetition frequency beam (180).

6. The laser system according to claim 2, further including a pulse compressor (8) arranged on the first output (S1) of the second optical coupler-splitter (42) and/or another pulse compressor placed on the second output (S2) of the second optical coupler-splitter (42).

7. The laser system according to claim 4, further including a pulse compressor (8) placed on the first output of the optical combiner (49) and/or another pulse compressor (8) placed on the second output of the optical combiner (49).

8. The laser system according to any one of claims 1 to 7, wherein the mode-locking oscillator is chosen among: a semiconductor oscillator or a solid-state oscillator, a hybrid oscillator or a fibre-optic oscillator.

9. The laser system according to any one of claims 1 to 8, wherein the optical amplifier system (2) includes an optical amplifier (21) or a plurality of optical amplifiers (21, 22, ..., 2N) chosen among the following types of optical amplifiers: active optical fibre amplifier and/or crystal amplifier.

10. The laser system according to any one of claims 1 to 9, wherein the optical amplifier system (2) includes a plurality of optical amplifiers (21, 22, ..., 2N) arranged in cascade, the plurality of optical amplifiers (21, 22, ..., 2N) comprising an optical power amplifier.

11. The laser system according to any one of claims 1 to 10, including a non-linear optical frequency doubler or optical frequency tripler optical system.

12. The laser system according to any one of claims 1 to 11, further including a pulse picker (3) placed downstream from the oscillator (1) and upstream from the optical amplifier system (2) or, respectively, from the optical power amplifier (22, 2N), the pulse picker (3) being adapted to select and/or modulate in amplitude a burst of pulses (30) and to inject the burst of pulses into the optical amplifier system (2) or, respectively, into the optical power amplifier (22, 2N).

13. The laser system according to claim 12, further including another source (14) adapted to generate a pulse beam (40) complementary of the burst of pulses (30) and another coupler (15) arranged so as to receive the secondary beam and the burst of source pulses and combine them into a composite pulse beam having a repetition frequency equal to the intra-burst repetition frequency of the burst of pulses, the other coupler (15) being adapted to inject the composite pulse beam into the optical amplifier system (2) or into the optical power amplifier (22, 2N).

14. The laser system according to any one of claims 1 to 13, further comprising an optical modulator (9) placed downstream from the optical amplifier system (2), the optical modulator (9) being adapted to select a burst or a plurality of bursts of amplified pulses (200) and/or to modulate in amplitude the burst or the plurality of bursts of amplified pulses.

15. A method for generating very high-rate laser pulses, comprising the following steps:
- generating a series of source pulses (100) of femtosecond or picosecond duration by an oscillator (1) having a first repetition frequency (F1), and
- optically amplifying the series of source pulses to a second repetition frequency (F2) multiple of the first repetition frequency (F1), the multiple being a natural integer number higher than or equal to two, so as to generate a series of very high-rate laser pluses (140, 150, 170, 180);
- spatially splitting the source laser beam (100) into a first pulse beam (110) at the first repetition frequency (F1) and a second pulse beam (120) at the first repetition frequency (F1);
- inducing an optical delay equal to a half-period of the first repetition frequency (F1) on the second pulse beam (120) so as to generate a second pulse beam (130) delayed by a half-period;
- recombining the first beam (110) and the second beam (130) delayed by a half-period, and formation of a first recombined beam (142) in which the pulses are rated at the second repetition frequency (F2) equal to twice the first repetition frequency (F1),
**characterized in that** the first repetition frequency (F1) is higher than or equal to 800 megahertz.
